# EUROPÄISCHE PATENTSCHRIFT

(11) **EP 0 985 598 B1**
(45) Veröffentlichungstag und Bekanntmachung des Hinweises auf die Patenterteilung: **03.11.2004**
(21) Anmeldenummer: 99115204.2
(22) Anmeldetag: 31.07.1999
(51) Int. Cl.: B62J 17/00

(54) **Motorradverkleidung**
Motorcycle fairing
Carénage pour motocyclette

(30) Priorität: 11.09.1998 DE 19841747
(43) Veröffentlichungstag der Anmeldung: 15.03.2000
(73) Patentinhaber: Bayerische Motoren Werke Aktiengesellschaft, 80809 München (DE)
(72) Erfinder: Abe, Karl Heinz, 86916 Kaufering (DE); Hack, Georg, 84028 Landshut (DE); Rehschuh, Rainer, 84072 Au (DE)

(56) Entgegenhaltungen:
- US-A- 3 979 147
- US-A- 5 330 029

## Beschreibung

Die Erfindung betrifft eine Motorradverkleidung mit einer Einrichtung zur Beeinflussung einer Wasserströmung, nach dem Oberbegriff des Anspruches 1. Eine derartige Motorradverkleidung ist aus der US 3979147 bekannt.

Das Patent DE 26 24 851 beschreibt eine Motorradverkleidung, die unter anderem an den dem Fahrer zugewandten Rändern einen Randwulst aufweist, der abgerundet und nach außen gezogen ist. Dabei geht der Randwulst im Querschnitt etwa tangential in die Innenfläche der Verkleidung über. Er beeinflußt die über die Außenfläche der Verkleidung strömende Luft bei ihrer Ablösung vom Rand der Verkleidung so, daß mit der Luftströmung von der Außenfläche mitgenommenes Regenwasser nicht auf den Fahrer trifft.

Es ist nicht bei jedem Verkleidungsteil möglich, einen solchen Randwulst auszubilden. Zum einen wirkt sich dieser unter Umständen aerodynamisch ungünstig aus, zum anderen können Anforderungen an das optische Erscheinungsbild des Motorrads der Ausbildung eines Randwulstes an manchen Stellen der Verkleidung entgegenstehen.

Deshalb ist es Aufgabe der Erfindung, eine weitere und andere Einrichtung zur Beeinflussung einer Wasserströmung, die von einer Luftströmung auf einer Außenfläche einer Motorradverkleidung mitgenommenes Regenwasser führt, zu schaffen, damit dieses nach seiner Ablösung von der Motorradverkleidung nicht auf einen Fahrer und/oder Sozius trifft.

Die Aufgabe wird erfindungsgemäß mit den kennzeichnenden Merkmalen des Anspruchs 1 gelöst. Weitere Ausgestaltungen der Erfindung ergeben sich aus den Unteransprüchen.

Nach der Erfindung ist mindestens eine Teilfläche einer Motorradverkleidung mit je mindestens einer nach außen ragenden Rippe versehen, die Wasser, in Richtung einer Motorradlängsachse gesehen, von vorne nach hinten und in Richtung einer Motorradquerachse gesehen, von innen nach außen so führt, daß sich dieses nach seiner Ablösung von der Motorradverkleidung mindestens an Teilbereichen des Fahrers und/oder des Sozius vorbei bewegt.

Eine an der Motorradverkleidung nach außen ragende Rippe hat den Vorteil, daß sie nicht nur am Rand der Verkleidung angebracht werden kann, sondern an jeder Stelle, an der es notwendig ist, von einer Luftströmung auf der Außenfläche der Motorradverkleidung mitgenommenes Regenwasser so zu führen, daß sich dieses nach seiner Ablösung von der Motorradverkleidung mindestens an Teilbereichen des Fahrers und/oder des Sozius vorbeibewegt. Rippen, die an jeder notwendigen Stelle der Motorradverkleidung angebracht werden können, haben zusätzlich noch den Vorteil, so geformt werden zu können, daß sie in das optische Erscheinungsbild des Motorrads passen.

Bei weiteren Ausführungsformen der Erfindung ist zum Beispiel eine Rippe an Teilflächen der Motorradverkleidung vorgesehen, die sich im wesentlichen horizontal erstrecken und/oder deren Oberfläche im wesentlichen nach unten zeigt.

Gerade bei sich horizontal erstreckenden Oberflächen der Motorradverkleidung sammelt sich bei Regen viel Wasser an, wozu sich noch das Spritzwasser addiert, das an nach unten gerichtete Oberflächen geschleudert wird. Eine Rippe, die, in Richtung einer Motorradlängsachse gesehen, von vorne nach hinten und, in Richtung einer Motorradquerachse gesehen, von innen nach außen verläuft, ist daher sehr vorteilhaft zum Abweisen von Wasser, gerade im unteren Bereich eines sich horizontal erstreckenden Verkleidungsteils.

Bei manchen Motorradverkleidungen neuerer Modelle werden sogenannte Stoßleisten montiert. Diese verkleiden einen Sturzbügel, der sich zum Beispiel rechts und links zur Seite hin erstreckt, und beziehen diesen somit in die Struktur der Motorradverkleidung mit ein. Diese Stoßleisten haben teilweise, um wenig Luftwiderstand zu erzeugen, sich im wesentlichen horizontal erstreckende Flächen, die vor dem Fahrer zur Seite aus dem Konturverlauf weiterer Motorradverkleidungsteile herausragen. Befinden sich Rippen an dieser Stoßleiste, unten an einer sich im wesentlichen horizontal erstreckenden Fläche, so hat das den Vorteil, daß diese einen Bereich vor dem Fahrer von Wasser freihalten, wo unter Umständen viel Spritzwasser anfällt. Vorteilhafterweise wird nach der Menge des Spritzwassers die Anzahl der Rippen bemessen und ebenfalls ihre Neigung, die dann, bei von vorne innen nach hinten außen verlaufenden Rippen, zu einer Fahrzeuglängsachse einen Winkel zwischen 10 Grad und 80 Grad bilden kann.

Eine bevorzugtes Ausführungsbeispiel der Erfindung ist in der nachfolgenden Beschreibung mit der zugehörigen Zeichnung dargestellt. Es zeigen:
- Figur 1: ein verkleidetes Motorrad mit einer Stoßleiste und daran befindlichen Rippen gemäß der Erfindung,
- Figur 2: die Stoßleiste aus Figur 1 in einer Ansicht von unten und
- Figur 3: die Stoßleiste aus Figur 1 in einer Seitenansicht.

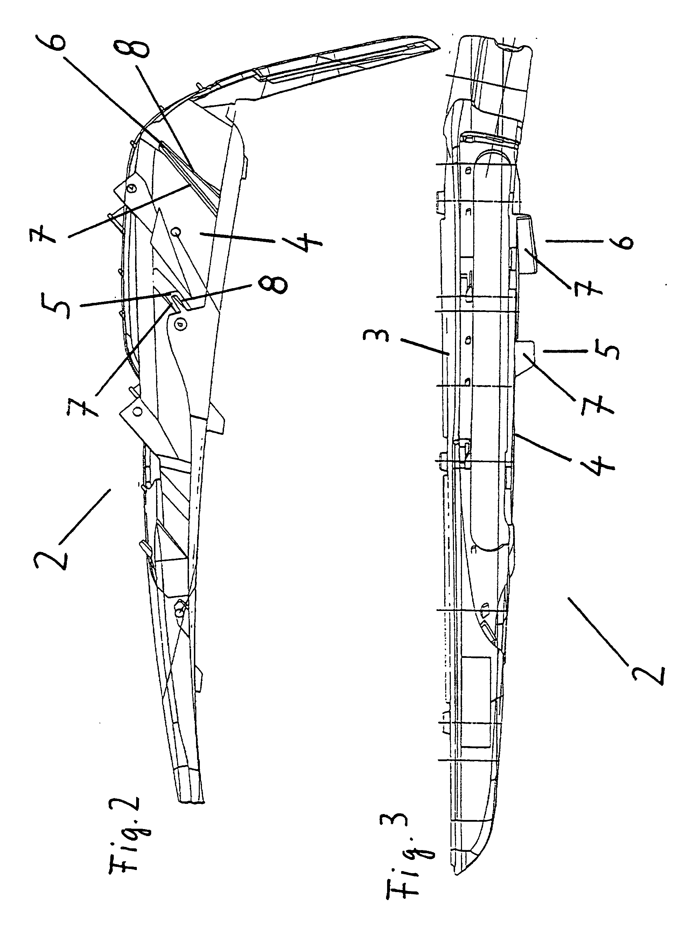

Die Figuren 2 und 3 enthalten zur Beschreibung der Erfindung nicht nötige Konstruktions- und Zeichnungshilfslinien.

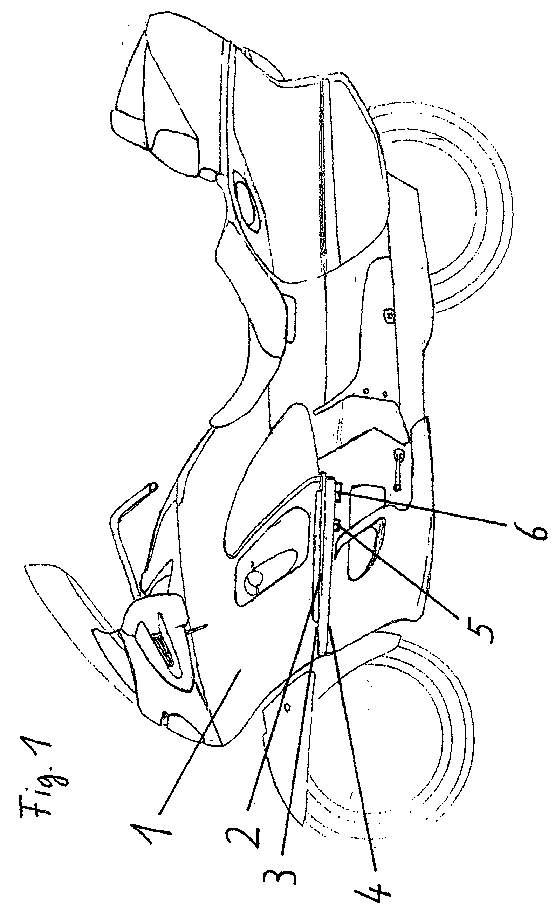

Nach Figur 1 ist ein Motorrad mit einer Motorradverkleidung 1 versehen. Eine Teilfläche dieser Motorradverkleidung 1 wird durch eine Stoßleiste 2 gebildet, die einen nicht sichtbaren Sturzbügel verkleidet, der vor einem nicht gezeichneten Fahrer zur Seite hin aus dem Konturverlauf der weiteren Motorradverkleidungsteile herausragt. Aus diesem Grund besitzt die Stoßleiste 2 relativ große, sich im wesentlichen horizontal erstreckende, nach oben und nach unten gerichtete Außenflächen, eine obere Außenfläche 3 und eine untere Außenfläche 4. An der unteren Außenfläche 4 sind zwei Rippen ausgebildet, eine vordere Rippe 5 und eine hintere Rippe 6. Die beiden Rippen 5,6 verlaufen in unterschiedlichem Winkel zur Motorradlängsachse, in deren Richtung gesehen von vorne nach hinten und, in Richtung einer Motorradquerachse gesehen, von innen nach außen. Beide Rippen ragen von der unteren Außenfläche 4 der Stoßleiste 2 nach außen und schließen dabei zur Motorradlängsachse einen Winkel im Bereich von 30 bis 60 Grad ein, wobei eine nach vorne gerichtete Wasserabweisfläche 7 der jeweiligen Rippe 5,6 einen anderen Winkel zur Motorradlängsachse einschließt als eine nach hinten, zum Fahrer gerichtete Fläche 8 (Figuren 2 und 3).

## Patentansprüche

1. Motorradverkleidung (1) mit einer Einrichtung zur Beeinflussung einer Wasserströmung, die von einer Luftströmung auf einer Außenfläche (3,4) der Motorradverkleidung (1) mitgenommenes Regenwasser führt, damit dieses nach seiner Ablösung von der Motorradverkleidung (1) nicht auf einen Fahrer und/oder Sozius trifft, wobei mindestens eine Teilfläche der Motorradverkleidung (1) mit je mindestens einer nach außen ragenden Rippe (5,6) versehen ist, die das Wasser, in Richtung einer Motorradlängsachse gesehen, von vorne nach hinten und in Richtung einer Motorradquerachse gesehen, von innen nach außen so führt, dass sich dieses nach seiner Ablösung von der Motorradverkleidung (1) mindestens an Teilbereichen des Fahrers und/oder des Sozius vorbei bewegt, **dadurch gekennzeichnet, dass** die Rippe (5,6) unten an einer sich im wesentlichen horizontal erstreckenden Außenfläche (4) einer Verkleidung für einen Sturzbügel (2) vorgesehen ist, wobei dieser vor dem Fahrer aus dem Konturverlauf weiterer Motorradverkleidungsteile zur Seite hin herausragt.

2. Motorradverkleidung (1) nach Anspruch 1, **dadurch gekennzeichnet, daß** die Rippe (5,6) an einer Teilfläche der Motorradverkleidung (1) vorgesehen ist, die sich im wesentlichen horizontal erstreckt.

3. Motorradverkleidung (1) nach Anspruch 1 oder 2, **dadurch gekennzeichnet, daß** die Rippe (5,6) an einer Teilfläche der Motorradverkleidung (1) vorgesehen ist, deren Außenfläche (3,4) im wesentlichen nach unten zeigt.

4. Motorradverkleidung (1) nach einen der Ansprüche 1 bis 3, **dadurch gekennzeichnet, dass** sich an der sich im wesentlichen horizontal erstreckenden Außenfläche (4) der Verkleidung für den Sturzbügel (2) mehrere Rippen (5,6) befinden, die, in Fahrzeuglängsrichtung gesehen, im wesentlichen von vorne innen nach hinten außen verlaufen und dabei zu einer Fahrzeuglängsachse einen Winkel zwischen 10 Grad und 80 Grad einschließen.

## Claims

1. A motorcycle covering (1) comprising a device for influencing a flow of rainwater entrained by air on an outer surface (3, 4) of the motorcycle covering (1) so that after separating from the covering (1) the water does not strike a driver and/or passenger, wherein at least a part of the surface of the covering (1) is provided with at least one outwardly extending rib (5, 6) which guides the water backwards as considered in the direction of a longitudinal axis of the motorcycle and outwards as considered in the direction of a transverse axis of the motorcycle so that the water, after coming loose from the covering (1), misses the driver and/or passenger at least at some places, **characterised in that** the rib (5, 6) is provided at the bottom on a substantially horizontal outer surface (4) of a covering for a roll bar (2), wherein the roll bar in front of the driver projects sideways out of the contour of other parts of the motorcycle covering.

2. A motorcycle covering (1) according to claim 1, **characterised in that** the rib (5, 6) is provided on a substantially horizontal part of the surface of the motorcycle covering (1).

3. A motorcycle covering (1) according to claim 1 or 2, **characterised in that** the rib (5, 6) is provided on a substantially downward-pointing part of the outer surface (3, 4) of the motorcycle covering (1).

4. A motorcycle covering (1) according to any of claims 1 to 3, **characterised in that** a number of ribs (5, 6) are provided on the substantially horizontal outer surface (4) of the covering for the roll bar (2) and extend substantially inwards at the front and outwards at the rear as considered in the longitudinal direction of the vehicle and include an angle of 10 to 80° with a longitudinal axis of the vehicle.

## Revendications

1. Carénage de motocyclette (1) comprenant un dispositif pour influencer un écoulement d'eau de pluie entraînée par un écoulement d'air sur une surface extérieure (3, 4) d'un carénage de motocyclette (1), afin que cette eau après sa chute du carénage (1) ne tombe pas sur un conducteur et/ou un passager, au moins une surface partielle du carénage (1) étant munie de respectivement au moins une nervure (5, 6) saillant vers l'extérieur qui véhicule l'eau, en direction d'un axe longitudinal de la motocyclette, de l'avant vers l'arrière, et en direction d'un axe transversal de la motocyclette, de l'intérieur vers l'extérieur, de telle sorte que l'eau, après sa chute du carénage de motocyclette (1), passe au moins partiellement à côté du conducteur et/ou du passager,
**caractérisé en ce que**
la nervure (5, 6) est prévue en bas, sur une surface extérieure (4) s'étendant pour l'essentiel horizontalement au revêtement d'un arceau anti-chute (2), celui-ci saillant du contour d'autres éléments de carénage devant le conducteur sur le côté.

2. Carénage de motocyclette (1) selon la revendication 1,
**caractérisé en ce que**
la nervure (5, 6) est prévue sur une surface partielle du carénage (1) qui s'étend pour l'essentiel horizontalement.

3. Carénage de motocyclette (1) selon la revendication 1 ou 2,
**caractérisé en ce que**
la nervure (5, 6) est prévue sur une surface partielle du carénage (1) dont la surface extérieure (3,4) est, pour l'essentiel, orientée vers les bas.

4. Carénage de motocyclette (1) selon l'une quelconque des revendications 1 à 3,
**caractérisé en ce qu'**
à la surface extérieure (4) s'étendant pour l'essentiel horizontalement au revêtement de l'arceau anti-chute (2) plusieurs nervures (5, 6) sont prévues qui s'étendent, dans la direction longitudinale du véhicule, pour l'essentiel de l'avant à l'intérieur vers l'arrière à l'extérieur, sous un angle compris entre 10 degrés et 80 degrés par rapport à l'axe longitudinal du véhicule.
